# FASCICULE DE BREVET EUROPEEN

(11) **EP 3 634 820 B1**
(45) Date de publication et mention de la délivrance du brevet: **28.02.2024**
(21) Numéro de dépôt: 18735673.8
(22) Date de dépôt: 12.06.2018
(51) Int. Cl.: B60T 7/10, B60T 13/58, B60T 13/66, B60T 17/04, B60T 17/22

(54) **ETRIER DE FREIN POUR VEHICULE COMPRENANT UNE UNITE DE COMMANDE DE FREINAGE**
BREMSSATTEL MIT INTEGRIERTEM BREMSSTEUEREINHEIT
BRAKE CALIPER WITH INTEGRATED BRAKE CONTROL UNIT

(30) Priorité: 12.06.2017 FR 1755238
(43) Date de publication de la demande: 15.04.2020
(73) Titulaire: Hitachi Astemo France, 93700 Drancy (FR)
(72) Inventeur: PASQUET, Thierry, 94700 Vincennes (FR)
(74) Mandataire: Brevalex
(86) Numéro de dépôt international: PCT/FR2018/051361
(87) Numéro de publication internationale: WO 2018/229411

(56) Documents cités:
- US-A1- 2007 278 856

## Description

### DOMAINE TECHNIQUE

L'invention se rapporte aux systèmes de freinage pour véhicule et plus particulièrement au freinage d'une roue de véhicule en cas de défaillance d'un correcteur électronique de trajectoire.

### ÉTAT DE LA TECHNIQUE ANTÉRIEURE

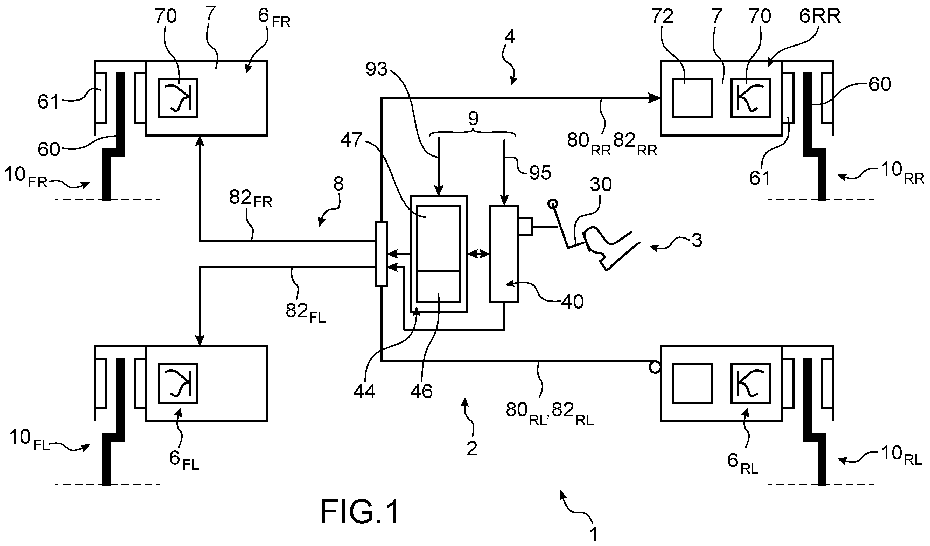

La figure 1 représente un système de freinage 2 pour véhicule automobile selon une conception connue. Le système de freinage 2 comprend des freins 6, un système d'actionnement 3 et un système de commande 4.

Le frein avant gauche 6_{FL} et le frein avant droit 6_{FR} sont des freins hydrauliques qui sont commandés par le système de commande 4.

Le système de commande 4 comprend un amplificateur de freinage 40 et un correcteur électronique de trajectoire 44. Le correcteur électronique de trajectoire 44 est conçu pour commander le freinage du véhicule 1 par les freins avant 6_{FL}, 6_{FR} et les freins arrière 6_{RF} et 6_{RR}, en fonction de la trajectoire du véhicule 1 et des efforts de freinage en provenance d'un utilisateur et transmis par l'amplificateur 40.

L'amplificateur 40 est alimenté électriquement par une ligne d'alimentation de puissance 93. Le correcteur électronique de trajectoire 44 est alimenté électriquement par une ligne d'alimentation de puissance 95, indépendamment de l'amplificateur 40. L'amplificateur 40 et le correcteur électronique de trajectoire 44 peuvent commander les freins 6 indépendamment l'un de l'autre par un réseau de commande 8 du véhicule 1. US2007/0278856A décrit une telle configuration conventionnelle de l'ECU.

Néanmoins, il en résulte des redondances dans le système de freinage 2, une masse et un encombrement plus important du véhicule 1.

Il existe un besoin pour freiner une roue de véhicule en cas de défaillance d'un amplificateur de freinage et/ou correcteur électronique de trajectoire, tout en limitant la masse et la complexité du système de freinage.

### EXPOSÉ DE L'INVENTION

L'invention vise à résoudre au moins partiellement les problèmes rencontrés dans les solutions de l'art antérieur.

A cet égard, l'invention a pour objet un étrier pour frein à disque électromécanique de roue de véhicule. L'étrier comprend une unité de commande configurée pour commander le freinage de la roue. L'étrier comprend des moyens de connexion électriques pour relier électriquement l'unité de commande à une ligne de commande de freinage du véhicule.

L'étrier de frein permet un freinage satisfaisant du véhicule en cas de défaillance du système de commande de freinage, notamment en cas de défaillance de l'amplificateur de freinage, tout en limitant la masse, l'encombrement et la complexité du système de freinage du véhicule.

L'invention peut comporter de manière facultative une ou plusieurs des caractéristiques suivantes combinées entre elles ou non.

Avantageusement, l'étrier comprend un dispositif de freinage hydraulique, un moyen de connexion hydraulique, un dispositif de freinage électromécanique, un moyen de raccordement d'alimentation et un moyen de connexion et d'échanges de données.

Le dispositif de freinage hydraulique est configuré pour assurer le freinage de service de la roue. Le moyen de connexion hydraulique est configuré pour raccorder le dispositif de freinage hydraulique à un circuit hydraulique de système de freinage du véhicule. Le dispositif de freinage électromécanique est configuré pour assurer le freinage de stationnement et/ou le freinage d'urgence du véhicule. Le moyen de raccordement d'alimentation est configuré pour raccorder électriquement l'unité de commande et/ou le dispositif de freinage électromécanique à une alimentation électrique de puissance. Le moyen de connexion et d'échanges de données est configuré pour raccorder l'unité de commande à la ligne de commande de freinage.

L'invention concerne également un système de freinage pour roues de véhicule. Le système de freinage comprend au moins un frein, un actionneur de freinage et la ligne de commande de freinage.

Le frein comporte un étrier tel que défini ci-dessus. L'actionneur de freinage est configuré pour être actionné par un utilisateur pour freiner le véhicule. L'actionneur de freinage comprend une pédale de frein et/ou un bouton de commande. La ligne de commande de freinage relie l'actionneur de freinage à l'unité de commande.

Avantageusement, le frein est un frein avant du véhicule.

Avantageusement, le système de freinage comprend un amplificateur de freinage.

L'amplificateur de freinage est configuré pour augmenter l'effort de freinage transmis par l'actionneur, l'unité de commande étant reliée à l'amplificateur de freinage par la ligne de commande de freinage.

En cas d'une détection de défaillance de l'amplificateur, l'unité de commande est configurée pour commander le freinage de la roue, lorsque l'actionneur de freinage est actionné par l'utilisateur.

Avantageusement, le système de freinage comprend un correcteur électronique de trajectoire configuré pour ordonner au frein de freiner la roue, l'unité de commande étant reliée au correcteur électronique de trajectoire par la ligne de commande de freinage,
En cas d'une détection de défaillance du correcteur électronique de trajectoire, l'unité de commande est configurée pour commander le freinage de la roue, lorsque l'actionneur de freinage est actionné par l'utilisateur.

Avantageusement, le système de freinage comprend une unité de commande centrale du correcteur électronique de trajectoire et/ou de l'amplificateur de freinage, qui est configurée pour commander le freinage par le frein via l'unité de commande du frein, lors d'un fonctionnement normal du frein.

En cas de défaillance du système de commande de freinage, notamment de l'amplificateur de freinage et/ou du correcteur électronique de trajectoire, l'unité de commande du frein est configurée pour commander le freinage de la roue indépendamment de de l'amplificateur de freinage et/ou du correcteur électronique de trajectoire, en particulier indépendamment de l'unité de commande centrale.

Avantageusement, le système de freinage comprend un boitier dans lequel est situé le correcteur électronique de trajectoire et l'amplificateur de freinage.

Le boitier comprend une pompe de pressurisation d'un circuit hydraulique de freinage, qui est conçue pour être commandée par le correcteur électronique de trajectoire et par l'amplificateur de freinage.

Avantageusement, le système de freinage comprend au moins un feu de freinage et un interrupteur d'allumage du feu de freinage, l'actionneur de freinage comprenant une pédale de frein, l'état ouvert ou fermé de l'interrupteur dépendant de l'enfoncement de la pédale de frein.

En cas d'une détection de défaillance de l'amplificateur et/ou du correcteur électronique de trajectoire, l'unité de commande est configurée pour commander le freinage de la roue, lorsqu'elle détecte via l'état de l'interrupteur que la pédale de frein est enfoncée.

L'invention concerne aussi un véhicule motorisé comprenant un système de freinage tel que défini ci-dessus, le véhicule étant de préférence un véhicule automobile.

### BRÈVE DESCRIPTION DES DESSINS

La présente invention sera mieux comprise à la lecture de la description d'exemples de réalisation, en référence aux dessins annexés sur lesquels :
- la figure 1 est une représentation schématique partielle d'un système de freinage pour véhicule selon une conception connue ;
- la figure 2 est une représentation schématique partielle d'un système de freinage pour véhicule selon un premier mode de réalisation de l'invention.

### EXPOSÉ DÉTAILLÉ DE MODES DE RÉALISATION PARTICULIERS

Des parties identiques, similaires ou équivalentes des différentes figures portent les mêmes références numériques de façon à faciliter le passage d'une figure à l'autre.

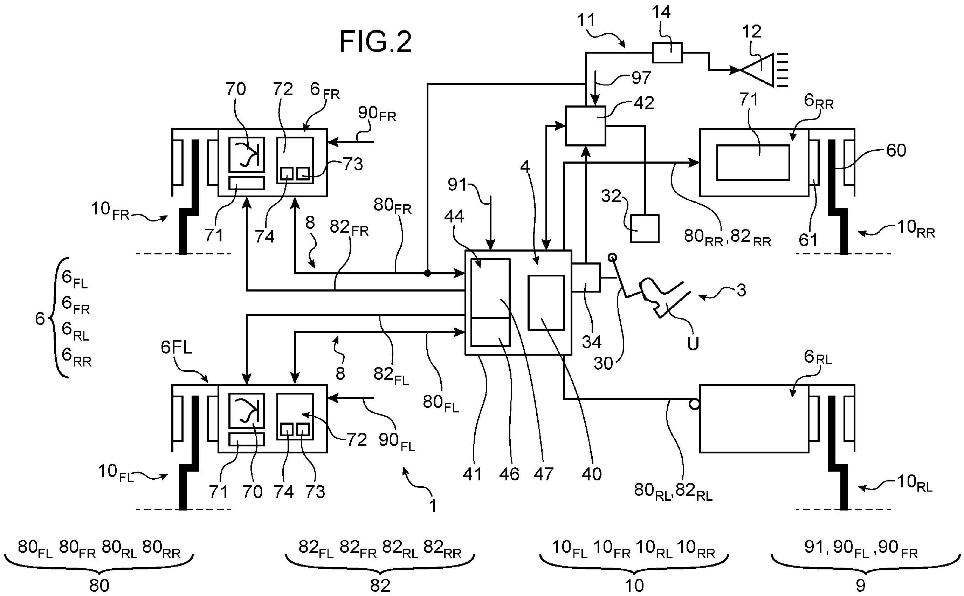

La figure 2 représente un véhicule motorisé 1. Dans le mode de réalisation représenté, il s'agit d'un véhicule automobile. Le véhicule 1 comprend une roue avant gauche 10_{FG}, une roue avant droite10_{FR}, une roue arrière gauche 10_{RG} et une roue arrière droite10_{RR}. Il comporte également un système de freinage 2.

Le système de freinage 2 est destiné à freiner les roues 10 du véhicule. Il comprend des freins à disque 6 pour freiner les roues 10, un système d'actionnement 3, un système de feu de freinage 11, un système de commande de freinage 4, un réseau de commande de freinage 8 et un réseau d'alimentation électrique de puissance 9.

Le système d'actionnement 3 de freinage 3 comprend des actionneurs de freinage 30, 32 et au moins un détecteur d'actionnement 34.

Les actionneurs comprennent une pédale de frein 30 pour le freinage de service, et un bouton de commande 32 pour le freinage de stationnement et le freinage d'urgence. La pédale de frein 30 est destinée à être enfoncée par un pied d'un utilisateur U pour freiner le véhicule 1. Le bouton de commande 32 est un bouton de freinage de stationnement. Le détecteur d'actionnement 34 est relié au système de commande 4 et il sert à détecter l'enfoncement de la pédale 30 et/ou du bouton de commande 32.

Le système de feu de freinage 11 comprend au moins un feu de freinage 12 et un interrupteur 14 d'allumage du feu de freinage. L'état ouvert ou fermé de l'interrupteur 14 dépend de l'enfoncement de la pédale de frein 30. Plus précisément, une unité de commande auxiliaire 42 du système de commande 4 change l'état de l'interrupteur 14, lorsque le détecteur 34 détecte que l'utilisateur U enfonce la pédale de frein 30.

Le système de commande de freinage 4 comprend l'amplificateur de freinage 40, le correcteur électronique de trajectoire 44, l'unité de commande auxiliaire 42 et un boitier 41.

L'amplificateur de freinage 40 est configuré pour augmenter l'effort de freinage qui est transmis par la pédale de frein 30 au réseau de commande 8, lorsque le détecteur 34 détecte l'enfoncement de la pédale de frein 30.

Le correcteur électronique de trajectoire 44 comprend un actionneur hydraulique 47 et une unité de commande centrale 46. Il est configuré pour ordonner à chacun des freins 6 de freiner la roue 10 correspondante via le réseau de commande 8.

L'actionneur hydraulique 47 comprend un accumulateur hydraulique et une pompe de pressurisation du circuit hydraulique 82 qui est commune à l'amplificateur de freinage 40 et au correcteur électronique de trajectoire 44.

L'unité de commande centrale 46 est configuré pour commander l'actionneur hydraulique 47. De manière générale, elle commande le freinage hydraulique et/ou électromécanique de chacun des freins avant gauche 6_{FL}, avant droit 6_{FR}, arrière gauche 6_{RL}, et arrière droit 6_{RR} indépendamment des autres via le réseau de commande 8.

Le correcteur électronique de trajectoire 44 et l'amplificateur de freinage 40 sont logés au sein d'un même boitier 41, ce qui permet de limiter les redondances dans le système de freinage 2, de limiter la masse du système de freinage 2 et son encombrement.

L'unité de commande auxiliaire 42 commande l'allumage ou l'extinction du feu de freinage 12 par l'intermédiaire de l'état de l'interrupteur 14.

Les freins 6 sont des freins à disque de véhicule. Le véhicule 1 comprend un frein avant gauche 6_{FL} pour freiner la roue avant gauche 10_{FL}, un frein avant droit 6_{FR} pour freiner la roue avant droite 10_{FR}, un frein arrière gauche 6_{RL} pour freiner la roue arrière gauche 10_{FL}, un frein arrière droit 6_{RR} pour freiner la roue arrière droite 10_{RR}.

Chacun des freins à disque 6 comporte un étrier 7 de type flottant, un piston 71 logé dans un corps de l'étrier 7, un disque 60, et des patins de freins 61 destinés à enserrer le disque 60 et déplaçables par le piston 71.

Chaque étrier 7 comprend un dispositif de freinage hydraulique 70 et un dispositif de freinage électromécanique 72. L'étrier 7 comporte également un moyen de connexion hydraulique, un moyen de raccordement d'alimentation et un moyen de connexion et d'échange de données.

Le dispositif de freinage hydraulique 70 est de structure connue. Il permet d'assurer le freinage hydraulique de la roue 6 correspondante. Il assure notamment le freinage de service de la roue 6. Le moyen de connexion hydraulique sert à raccorder le dispositif de freinage hydraulique 70 au circuit hydraulique 82.

Le dispositif de freinage électromécanique 72 comprend un actionneur électromécanique 74 et une unité de commande locale de freinage 73. Le dispositif de freinage électromécanique 72 est relié à un réseau de type CAN 80 du réseau de commande 8 par un moyen de connexion et d'échange de données. Il est alimenté électriquement, au moins partiellement indépendamment du système de commande 4, par le réseau d'alimentation 9.

Le dispositif de freinage électromécanique 72 est configuré pour assurer le freinage électromécanique de la roue 10 correspondante. Il assure notamment le freinage de stationnement et le freinage d'urgence de la roue.

L'actionneur électromécanique 74 comprend un moteur électrique et un dispositif de transmission qui provoque le déplacement du piston 71 lorsqu'il est entraîné par le moteur électrique.

L'unité de commande locale 73 comprend une interface CAN par laquelle elle est reliée par le réseau de commande 8 à l'unité de commande centrale 46 et à l'unité de commande auxiliaire 42. Cette interface CAN fait partie du moyen de connexion.

L'unité de commande locale 73 est configurée pour commander le moteur électrique de l'actionneur électromécanique 74. Elle commande ainsi localement le freinage de la roue 6. En fonctionnement normal du frein 6, l'unité de commande 73 est configurée pour commander le freinage du frein 6 sur ordre de l'amplificateur de trajectoire 40 et/ou de l'unité centrale 46.

En cas de défaillance du système de commande 4, chacune des unités de commande 73 est configurée pour commander localement le freinage de la roue correspondante 10, indépendamment du système de commande 4.

En particulier, en cas de défaillance de l'amplificateur 40, l'unité de commande 73 est configurée pour commander le freinage de la roue 10 à l'actionneur électromécanique 74, lorsque le détecteur d'actionnement 34 détecte que la pédale de frein 30 est enfoncée par l'utilisateur U, notamment indépendamment de l'amplificateur 40.

En cas de défaillance du correcteur électronique de trajectoire 44, l'unité de commande 73 est configurée pour commander le freinage de la roue 10 à l'actionneur électromécanique 74, indépendamment de l'unité de commande centrale 46.

Chaque unité de commande 73 est configurée pour commander la réduction temporaire de l'effort de freinage exercé sur la roue correspondante 10 lorsque cette roue 10 commence à glisser. Elle forme alors un système antiblocage local de la roue 10. Ce système antiblocage local peut agir en complément d'un système antiblocage des roues de structure connue, qui est également connu sous l'acronyme d'«ABS ».

Le réseau de commande 8 comprend un réseau transmission de données 80 et un circuit hydraulique 82.

Le réseau transmission de données 80 est un réseau de type CAN, de l'anglais « control area network ». Ce réseau de type CAN 80 respecte notamment les conditions de la norme ISO 11898.

Le réseau de type CAN 80 comprend des lignes de commande de freinage 80_{FL}, 80_{FR}, 80_{RL}, 80_{RR} qui relient entre elles les unités de commande du véhicule, dont l'unité de commande centrale 46, l'unité de commande auxiliaire 42 et les unités de commande 73 des freins 6.

Le réseau de type CAN 80 comprend une ligne de commande de freinage de la roue avant gauche 80_{FL}, une ligne de commande de freinage de la roue avant droite 80_{FR}, une ligne de commande de freinage de la roue arrière gauche 80_{RL}, une ligne de commande de freinage de la roue arrière droite 80_{RR}.

La ligne de commande de freinage de la roue avant gauche 80_{FL} relie l'amplificateur 40 et le correcteur électronique de trajectoire 44 à l'unité de commande 73 du frein avant gauche 6_{FL}. La ligne de commande de freinage de la roue avant droite 80_{FR} relie l'amplificateur 40 et le correcteur électronique de trajectoire 44 à l'unité de commande 73 du frein avant droit 6_{FR}.

La ligne de commande de freinage de la roue arrière gauche 80_{RL} relie l'amplificateur 40 et le correcteur électronique de trajectoire 44 à l'unité de commande 73 du frein arrière gauche 6_{RL}. La ligne de commande de freinage de la roue arrière droite 80_{RR} relie l'amplificateur 40 et le correcteur électronique de trajectoire 44 à l'unité de commande 73 du frein arrière droit 6_{RR}.

Le circuit hydraulique 82 est un circuit de pressurisation des freins 6. Il comprend une ligne hydraulique de freinage avant gauche 82_{FL}, une ligne hydraulique de freinage avant droite 82_{FR}, une ligne hydraulique de freinage arrière gauche 82_{RL}, une ligne hydraulique de freinage arrière droite 82_{RR}.

La ligne hydraulique de freinage avant gauche 82_{FL} relie fluidiquement l'actionneur hydraulique 47 au dispositif hydraulique de freinage 70 du frein avant gauche 6_{FL}. La ligne hydraulique de freinage avant droite 82_{FR} relie fluidiquement l'actionneur hydraulique 47 au dispositif hydraulique de freinage 70 du frein avant droit 6_{FR}.

La ligne hydraulique de freinage arrière gauche 82_{RL} relie fluidiquement l'actionneur hydraulique 47 au dispositif hydraulique de freinage 70 du frein arrière gauche 6_{RL}. La ligne hydraulique de freinage arrière droite 82_{RR} relie fluidiquement l'actionneur hydraulique 47 au dispositif hydraulique de freinage 70 du frein arrière droit 6_{RR}.

Le réseau d'alimentation 9 comprend une ligne d'alimentation électrique de puissance 91 pour alimenter électriquement le système de commande 4 dans le boitier 41, une ligne d'alimentation électrique de puissance 97 pour alimenter électriquement l'unité de commande auxiliaire 42, et une ligne d'alimentation électrique de puissance 90 pour alimenter chacun des freins 6.

Plus précisément, le réseau d'alimentation 9 comprend une ligne d'alimentation électrique de puissance 90_{FL} du frein avant gauche 6_{FL}, une ligne d'alimentation électrique de puissance 90_{FR} du frein avant droit 6_{FR}, une ligne d'alimentation électrique de puissance 90_{FL} du frein arrière gauche 6_{RL}, et une ligne d'alimentation électrique de puissance 90_{RR} du frein arrière droit 6_{RR}.

Le réseau d'alimentation 9 est configuré pour apporter l'énergie à chacun des dispositifs de freinage électromécanique 72 qui leur est nécessaire pour fonctionner indépendamment les uns des autres, y compris en cas de défaillance du système de commande 4.

Le procédé de freinage d'urgence de la roue avant gauche 10_{FL} en cas de défaillance du système de commande 4 est expliqué ci-dessous.

Lorsque le système de commande 4 est défaillant, par exemple en cas de défaillance de l'amplificateur 40, la puissance de freinage qui est transmise à chacun des freins 6 par le circuit hydraulique 82 est susceptible d'être insuffisante.

L'unité de commande locale 73 du frein avant gauche 6_{FL} est informée, par le réseau de type CAN 80, de la défaillance du système de commande 4 et du fait que la pédale de frein 30 est enfoncée.

L'unité de commande 73 décide alors de commander le freinage de la roue avant gauche 10_{FL}, indépendamment du système de commande 4 auquel elle est normalement asservie. Elle ordonne alors au frein avant gauche 6_{FL} de freiner la roue, tant que la pédale de frein 30 est enfoncée.

L'unité de commande 73 est programmée pour permettre un freinage optimal de la roue avant gauche 10_{FL}. Elle est notamment apte à commander une réduction temporaire de l'effort de freinage exercé sur la roue correspondante 10 avant gauche 10_{FL}, lorsque cette roue 10_{FL} commence à glisser.

L'unité de commande 73 peut continuer à commander ou non le freinage de la roue avant gauche 10_{FL} jusqu'à l'arrêt complet du véhicule 1, suivant les situations de conduite.

Le procédé de freinage d'urgence de la roue avant droite 10_{FR}, celui de la roue arrière gauche 10_{RG} et celui de la roue arrière droite 10_{RR} sont analogues à celui qui a été expliqué ci-dessus en référence à la roue avant gauche 10_{FL}.

Le procédé de freinage d'urgence mis en oeuvre à l'aide des étriers 7 de freins selon l'invention est particulièrement utile lorsque l'amplificateur 40 et le correcteur électronique de trajectoire 44 sont réunis dans le boitier 41, et qu'une défaillance de l'amplificateur40 est susceptible d'entrainer une défaillance du correcteur électronique de trajectoire 44 et réciproquement.

Les étriers 7 selon l'invention évitent notamment d'avoir recours à un système de freinage hydraulique de sécurité qui comprend un actionneur hydraulique et une unité de commande. Un tel système de freinage hydraulique de sécurité est également connu sous l'acronyme de « FBU » en anglais.

Bien entendu, diverses modifications peuvent être apportées par l'homme du métier à l'invention qui vient d'être décrite sans sortir du cadre de l'exposé de l'invention.

De manière générale, le véhicule motorisé 1 comprend au moins trois roues dont une roue droite et une roue gauche. Le véhicule motorisé 1 peut être de différente nature. En variante, le véhicule 1 est un véhicule de type à selle à trois roues, une camionnette, un camion etc.

Le système de feu de freinage 11 peut comporter plusieurs feux de freinage 12, par exemple trois feux de freinage 12. Les feux de freinage 12 sont notamment situés à l'arrière du véhicule 1.

Le système de freinage 2 pourrait être dépourvu de ligne hydraulique de freinage avant et/ou arrière 82. Les freins correspondant 6 sont alors dépourvus de dispositif hydraulique de freinage 70, ce qui limite leur complexité, leur masse et leur encombrement.

En variante, seuls les freins avant 6_{FL} et 6_{FR} comprennent chacun une unité de commande 73 et les freins arrières 6_{RL} et 6_{RR} sont dépourvus d'unité de commande 73.

En variante encore, seuls les freins arrières 6_{RL} et 6_{RR} comprennent chacun une unité de commande 73 et les freins avant 6_{FL} et 6_{FR} sont dépourvus d'unité de commande 73.

De manière générale, il est très préférable que les freins 6 des roues motrices soient équipés chacun d'une unité de commande locale 73.

### NOMENCLATURE EN REFERENCE AUX FIGURES

1 : véhicule
2 : système de freinage
3 : système d'actionnement
4 : système de commande
6 : freins
6_{FL} : frein avant gauche
6 _{FR} : frein avant droit
6_{RL} : frein arrière gauche
6 _{RR} : frein arrière droit
8 : réseau de commande de freinage
9 : réseau d'alimentation électrique de puissance
10 : roues
10_{FL}: roue avant gauche
10_{FR} : roue avant droite
10_{RL} : roue arrière gauche
10_{RR} : roue arrière droite
11 : système de feu de freinage
12 : feu de freinage
14 : interrupteur d'allumage du feu de freinage
30 : pédale de frein
32 : bouton de commande
34 : détecteur d'actionnement
40 : amplificateur
41 : boitier
42 : unité de commande auxiliaire
44 : correcteur électronique de trajectoire
46 : unité de commande centrale
47 : actionneur hydraulique
60 : disque
61 : patin de frein
70 : dispositif hydraulique de freinage
71 : piston
72 : dispositif électromécanique de freinage
73 : unité de commande
74 : actionneur électromécanique
80 : réseau de type CAN
80_{FL} : ligne de commande de freinage de la roue avant gauche
80_{FR} : ligne de commande de freinage de la roue avant droite
80_{RL} : ligne de commande de freinage de la roue arrière gauche
80_{RR}: ligne de commande de freinage de la roue arrière droite
82 : circuit hydraulique
82_{FL} : ligne hydraulique de freinage avant gauche
82_{FR} : ligne hydraulique de freinage avant droite
82_{RL} : ligne hydraulique de freinage arrière gauche
82_{RR} ligne hydraulique de freinage arrière droite
90_{FL:} ligne d'alimentation électrique de puissance du frein avant gauche
90_{FR} : ligne d'alimentation électrique de puissance du frein avant droit
90_{FL} : ligne d'alimentation électrique de puissance du frein arrière gauche
90_{RR} : ligne d'alimentation électrique de puissance du frein arrière droit.

## Revendications

1. Étrier (7) pour frein à disque (6) électromécanique de roue (10) de véhicule, **caractérisé en ce qu'**il comprend :
une unité de commande (73) configurée pour commander le freinage de la roue (10), et
des moyens de connexion électriques pour relier électriquement l'unité de commande (73) à une ligne de commande de freinage (80_{FL}, 80_{FR}, 80_{RL}, 80_{RR}) du véhicule.

2. Étrier (7) selon la revendication précédente, comprenant :
un dispositif de freinage hydraulique (70) pour assurer le freinage de service de la roue (10),
un moyen de connexion hydraulique pour raccorder le dispositif de freinage hydraulique (70) à un circuit hydraulique (82) de système de freinage (2) du véhicule,
un dispositif de freinage électromécanique (72) pour assurer le freinage de stationnement et/ou le freinage d'urgence du véhicule (1).

3. Étrier (7) selon l'une quelconque des revendications précédentes, comprenant un moyen de raccordement d'alimentation pour raccorder électriquement l'unité de commande (73) et/ou le dispositif de freinage électromécanique (72) à une alimentation électrique de puissance, et
un moyen de connexion et d'échange de données pour raccorder l'unité de commande (73) à la ligne de commande de freinage (80_{FL}, 80_{FR}, 80_{RL}, 80_{RR}).

4. Système de freinage (2) pour roues (10) de véhicule, comprenant :
au moins un frein (6) qui comporte un étrier (7) selon l'une quelconque des revendications précédentes, et
un actionneur de freinage (30, 32) qui est configuré pour être actionné par un utilisateur pour freiner le véhicule (1), l'actionneur de freinage (30, 32) comprenant une pédale de frein (30) et/ou un bouton de commande (32), et
la ligne de commande de freinage (80_{FL}, 80_{FR}, 80_{RL}, 80_{RR}) qui relie l'actionneur de freinage (30, 32) à l'unité de commande (73).

5. Système de freinage (2) selon la revendication précédente, dans lequel le frein (6) est un frein avant (6_{FL}, 6_{FR}) du véhicule.

6. Système de freinage (2) selon l'une quelconque des revendications 4 et 5, comprenant :
un amplificateur de freinage (40) configuré pour augmenter l'effort de freinage transmis par l'actionneur (30, 32), l'unité de commande (73) étant reliée à l'amplificateur de freinage (40) par la ligne de commande de freinage (80_{FL}, 80_{FR}, 80_{RL}, 80_{RR}), et
dans lequel, en cas d'une détection de défaillance de l'amplificateur (40), l'unité de commande (73) est configurée pour commander le freinage de la roue (10), lorsque l'actionneur de freinage (30, 32) est actionné par l'utilisateur.

7. Système de freinage (2) selon l'une quelconque des revendications 4 à 6, comprenant un correcteur électronique de trajectoire (44) configuré pour ordonner au frein (6) de freiner la roue (10), l'unité de commande (73) étant reliée au correcteur électronique de trajectoire (44) par la ligne de commande de freinage (80_{FL}, 80_{FR}, 80_{RL}, 80_{RR}),
dans lequel, en cas d'une détection de défaillance du correcteur électronique de trajectoire (44), l'unité de commande (73) est configurée pour commander le freinage de la roue (10), lorsque l'actionneur de freinage (30, 32) est actionné par l'utilisateur.

8. Système de freinage (2) selon la revendication précédente combinée aux revendications 3 et 6, comprenant un boitier (41) dans lequel est situé le correcteur électronique de trajectoire (44) et l'amplificateur de freinage (40).

9. Système de freinage (2) selon la revendication précédente, dans lequel le boitier (41) comprend une pompe de pressurisation d'un circuit hydraulique de freinage (82), qui est conçue pour être commandée par le correcteur électronique de trajectoire (44) et par l'amplificateur de freinage (40).

10. Système de freinage (2) selon l'une quelconque des revendications précédentes dépendant de la revendication 5, dans lequel les deux freins avant (6_{FL}, 6_{FR}) comprennent chacun un étrier selon l'une quelconque des revendications précédentes 1 à 3.

11. Système de freinage (2) selon la revendication 10, dans lequel chaque frein (6) d'une roue du véhicule (1) motorisé comprend un étrier (7) de frein à disque électromécanique de roue de véhicule, l'étrier (7) comprenant :
une unité de commande (73) configurée pour commander le freinage de la roue (10), et
des moyens de connexion électriques pour relier électriquement l'unité de commande (73) à une ligne de commande de freinage (80_{FL}, 80_{FR}, 80_{RL}, 80_{RR}) du véhicule.

12. Système de freinage (2) selon l'une quelconque des revendications précédentes dépendant de la revendication 6, dans lequel l'étrier (7) inclut un dispositif de freinage électromécanique (72) qui comprend un actionneur électromécanique (74) qui comporte un moteur électrique, dans lequel chaque unité de commande (73) d'étrier est configurée pour commander le freinage de la roue (10) correspondante en commandant le moteur électrique de l'actionneur électromécanique (74) en cas de défaillance de l'amplificateur de freinage (40).

13. Système de freinage (2) selon l'une quelconque des revendications précédentes dépendant de la revendication 7, dans lequel l'étrier (7) inclut un dispositif de freinage électromécanique (72) qui comprend un actionneur électromécanique (74) qui comporte un moteur électrique, dans lequel chaque unité de commande (73) d'étrier est configurée pour commander le freinage de la roue (10) correspondante en commandant le moteur électrique de l'actionneur électromécanique (74) en cas de défaillance du correcteur électronique de trajectoire (44).

14. Système de freinage (2) selon l'une quelconque des revendications précédentes, dans lequel le frein (6) comprend un piston (71) logé dans l'étrier (7), dans lequel l'actionneur électromécanique (74) inclut un moteur électrique et un dispositif de transmission pour déplacer le piston (71) lorsqu'il est entraîné par le moteur électrique.

15. Système de freinage (2) selon l'une quelconque des revendications 6 à 14, comprenant au moins un feu de freinage (12) et un interrupteur (14) d'allumage du feu de freinage, l'actionneur de freinage (30, 32) comprenant une pédale de frein (30), l'état ouvert ou fermé de l'interrupteur (14) dépendant de l'enfoncement de la pédale de frein (30),
dans lequel, en cas d'une détection de défaillance de l'amplificateur (40) et/ou du correcteur électronique de trajectoire (44), l'unité de commande (73) est configurée pour commander le freinage de la roue (10), lorsqu'elle détecte via l'état de l'interrupteur (14) que la pédale de frein (30) est enfoncée.

16. Véhicule (1) motorisé comprenant un système de freinage (2) selon l'une quelconque des revendications 4 à 14.

17. Véhicule (1) motorisé selon la revendication précédente, dans lequel le véhicule (1) est une voiture automobile.

## Patentansprüche

1. Bremssattel (7) für eine elektromagnetische Scheibenbremse (6) eines Rades (10) eines Fahrzeugs, **dadurch gekennzeichnet, dass** sie umfasst:
eine Steuerungseinheit (73), die konfiguriert ist, um die Bremsung des Rades (10) zu steuern, und
elektrische Verbindungsmittel zum elektrischen Anschließen der Steuerungseinheit (73) an eine Bremssteuerungsleitung (80_{FL}, 80_{FR}, 80_{RL}, 80_{RR}) des Fahrzeugs.

2. Bremssattel (7) nach dem vorstehenden Anspruch, umfassend:
eine hydraulische Bremsvorrichtung (70), um für die Betriebsbremsung des Rades (10) zu sorgen,
ein hydraulisches Verbindungsmittel zum Anschließen der hydraulischen Bremsvorrichtung (70) an einen Hydraulikkreis (82) eines Bremssystems (2) des Fahrzeugs,
eine elektromechanische Bremsvorrichtung (72) um für die Feststellbremsung und/oder die Notbremsung des Fahrzeugs (1) zu sorgen.

3. Bremssattel (7) nach einem der vorstehenden Ansprüche, umfassend ein Versorgungsanschlussmittel, um die Steuerungseinheit (73) und/oder die elektromechanische Bremsvorrichtung (72) elektrisch an eine elektrische Stromversorgung anzuschließen, und
ein Verbindungs- und Datenaustauschmittel, um die Steuerungseinheit (73) an die Bremssteuerungsleitung (80_{FL}, 80_{FR}, 80_{RL}, 80_{RR}) anzuschließen.

4. Bremssystem (2) für Räder (10) eines Fahrzeugs, umfassend:
mindestens eine Bremse (6), die einen Bremssattel (7) nach einem der vorstehenden Ansprüche beinhaltet, und
ein Bremsbetätigungsglied (30, 32), das konfiguriert ist, um durch einen Nutzer betätigt zu werden, um das Fahrzeug (1) zu bremsen, wobei das Bremsbetätigungsglied (30, 32) ein Bremspedal (30) und/oder einen Steuerknopf (32) umfasst, und
die Bremssteuerungsleitung (80_{FL}, 80_{FR}, 80_{RL}, 80_{RR}), die das Bremsbetätigungsglied (30, 32) an die Steuerungseinheit (73) anschließt.

5. Bremssystem (2) nach dem vorstehenden Anspruch, wobei die Bremse (6) eine Vorderradbremse (6_{FL}, 6_{FR}) des Fahrzeugs ist.

6. Bremssystem (2) nach einem der Ansprüche 4 und 5, umfassend:
einen Bremsverstärker (40), der konfiguriert ist, um die von dem Betätigungsglied (30, 32) übertragene Bremskraft zu erhöhen, wobei die Steuerungseinheit (73) durch die Bremssteuerungsleitung (80_{FL}, 80_{FR}, 80_{RL}, 80_{RR}) an den Bremsverstärker (40) angeschlossen ist, und
wobei die Steuerungseinheit (73) im Falle einer Erkennung eines Ausfalls des Verstärkers (40) konfiguriert ist, um die Bremsung des Rades (10) zu steuern, wenn das Bremsbetätigungsglied (30, 32) von dem Nutzer betätigt wird.

7. Bremssystem (2) nach einem der Ansprüche 4 bis 6, umfassend ein elektronisches Stabilitätsprogramm (44), das konfiguriert ist, um der Bremse (6) zu befehlen, das Rad (10) zu bremsen, wobei die Steuerungseinheit (73) durch die Bremssteuerungsleitung (80_{FL}, 80_{FR}, 80_{RL}, 80_{RR}) an das elektronische Stabilitätsprogramm (44) angeschlossen ist,
wobei die Steuerungseinheit (73) im Falle einer Erkennung eines Ausfalls des elektronischen Stabilitätsprogramms (44) konfiguriert ist, um die Bremsung des Rades (10) zu steuern, wenn das Bremsbetätigungsglied (30, 32) durch den Nutzer bestätigt wird.

8. Bremssystem (2) nach dem vorstehenden Anspruch, in Kombination mit den Ansprüchen 3 und 6, umfassend ein Gehäuse (41), in dem sich das elektronische Stabilitätsprogramm (44) befindet, und den Bremsverstärker (40).

9. Bremssystem (2) nach dem vorstehenden Anspruch, wobei das Gehäuse (41) eine Druckpumpe eines hydraulischen Bremskreises (82) umfasst, die gestaltet ist, um von dem elektronischen Stabilitätsprogramm (44) und von dem Bremsverstärker (40) gesteuert zu werden.

10. Bremssystem (2) nach einem der vorstehenden Ansprüche, von Anspruch 5 abhängig, wobei die beiden Vorderradbremsen (6_{FL}, 6_{FR}) jeweils einen Bremssattel nach einem der vorstehenden Ansprüche 1 bis 3 umfassen.

11. Bremssystem (2) nach Anspruch 10, wobei jede Bremse (6) eines Rades des motorisierten Fahrzeugs (1) einen Bremssattel (7) einer elektromechanischen Scheibenbremse eines Fahrzeugrades umfasst, wobei der Bremssattel (7) umfasst:
eine Steuerungseinheit (73), die konfiguriert ist, um die Bremsung des Rades (10) zu steuern, und
elektrische Verbindungsmittel zum elektrischen Anschließen der Steuerungseinheit (73) an eine Bremssteuerungsleitung (80_{FL}, 80_{FR}, 80_{RL}, 80_{RR}) des Fahrzeugs.

12. Bremssystem (2) nach einem der vorstehenden Ansprüche, von Anspruch 6 abhängig, wobei der Bremssattel (7) eine elektromechanische Bremsvorrichtung (72) beinhaltet, die ein elektromechanisches Betätigungsglied (74) umfasst, das einen Elektromotor beinhaltet, wobei jede Steuerungseinheit (73) eines Bremssattels konfiguriert ist, um die Bremsung des entsprechenden Rades (10) durch Steuern des Elektromotors des elektromechanischen Betätigungsglieds (74) im Falle eines Ausfalls des Bremsverstärkers (40) zu steuern.

13. Bremssystem (2) nach einem der vorstehenden Ansprüche, von Anspruch 7 abhängig, wobei der Bremssattel (7) eine elektromechanische Bremsvorrichtung (72) beinhaltet, die ein elektromechanisches Betätigungsglied (74) umfasst, das einen Elektromotor beinhaltet, wobei jede Steuerungseinheit (73) eines Bremssattels konfiguriert ist, um die Bremsung des entsprechenden Rades (10) durch Steuern des Elektromotors des elektromechanischen Betätigungsglieds (74) im Falle eines Ausfalls des elektronischen Stabilitätsprogramms (44) zu steuern.

14. Bremssystem (2) nach einem der vorstehenden Ansprüche, wobei die Bremse (6) einen Kolben (71) umfasst, der in dem Bremssattel (7) untergebracht ist, wobei das elektromechanische Betätigungsglied (74) einen Elektromotor und eine Übertragungsvorrichtung zum Bewegen des Kolbens (71) beinhaltet, wenn er von dem Elektromotor angetrieben wird.

15. Bremssystem (2) nach einem der Ansprüche 6 bis 14, umfassend mindestens eine Bremsleuchte (12) und einen Schalter (14) zum Einschalten der Bremsleuchte, wobei das Bremsbetätigungsglied (30, 32) ein Bremspedal (30) umfasst, wobei der offene oder geschlossene Zustand des Schalters (14) vom Eindrücken des Bremspedals (30) abhängig ist,
wobei die Steuerungseinheit (73) im Falle einer Erkennung eines Ausfalls des Verstärkers (40) und/oder des elektronischen Stabilitätsprogramms (44) konfiguriert ist, um die Bremsung des Rades (10) zu steuern, wenn sie durch den Zustand des Schalters (14) erkennt, dass das Bremspedal (30) eingedrückt ist.

16. Motorisiertes Fahrzeug (1), umfassend ein Bremssystem (2) nach einem der Ansprüche 4 bis 14.

17. Motorisiertes Fahrzeug (1) nach dem vorstehenden Anspruch, wobei das Fahrzeug (1) ein Kraftfahrzeug ist.

## Claims

1. A calliper (7) for an electromechanical disc brake (6) of a vehicle wheel (10), **characterised in that** it comprises:
a control unit (73) configured to control the braking of the wheel (10), and
electrical connection means for electrically connecting the control unit (73) to a braking control line (80_{FL}, 80_{FR}, 80_{RL}, 80_{RR}) of the vehicle.

2. The calliper (7) according to the preceding claim, comprising:
a hydraulic braking device (70) to ensure the service braking of the wheel (10),
a hydraulic connection means for connecting the hydraulic braking device (70) to a hydraulic circuit (82) of the braking system (2) of the vehicle,
an electromechanical braking device (72) to ensure the parking braking and/or emergency braking of the vehicle (1).

3. The calliper (7) according to any of the preceding claims, comprising a supply connection means for electrically connecting the control unit (73) and/or the electromechanical braking device (72) to a power supply, and
a connection and data exchange means to connect the control unit (73) to the braking control line (80_{FL}, 80_{FR}, 80_{RL}, 80_{RR}).

4. A braking system (2) for vehicle wheels (10), comprising:
at least one brake (6) which includes a calliper (7) according to any of the preceding claims, and
a braking actuator (30, 32) which is configured to be actuated by a user to brake the vehicle (1), the braking actuator (30, 32) comprising a brake pedal (30) and/or a control knob (32), and
the braking control line (80_{FL}, 80_{FR}, 80_{RL}, 80_{RR}) which connects the braking actuator (30, 32) to the control unit (73).

5. The braking system (2) according to the preceding claim, wherein the brake (6) is a front brake (6_{FL}, 6_{FR}) of the vehicle.

6. The braking system (2) according to any of claims 4 and 5, comprising:
a braking amplifier (40) configured to increase the braking force transmitted by the actuator (30, 32), the control unit (73) being connected to the braking amplifier (40) by the braking control line (80_{FL}, 80_{FR}, 80_{RL}, 80_{RR}), and
wherein, in the event that a failure of the amplifier (40) is detected, the control unit (73) is configured to control the braking of the wheel (10), when the braking actuator (30, 32) is actuated by the user.

7. The braking system (2) according to any of claims 4 to 6, comprising an electronic stability control (44) configured to command the brake (6) to brake the wheel (10), the control unit (73) being connected to the electronic stability control (44) by the braking control line (80_{FL}, 80_{FR}, 80_{RL}, 80_{RR}),
wherein, in the event that a failure of the electronic stability control (44) is detected, the control unit (73) is configured to control the braking of the wheel (10), when the braking actuator (30, 32) is actuated by the user.

8. The braking system (2) according to the preceding claim combined with claims 3 and 6, comprising a box (41) in which the electronic stability control (44) and the braking amplifier (40) are located.

9. The braking system (2) according to the preceding claim, wherein the box (41) comprises a pressurising pump of a hydraulic braking circuit (82), which is configured to be controlled by the electronic stability control (44) and by the braking amplifier (40).

10. The braking system (2) according to any of the preceding claims depending on claim 5, wherein both front brakes (6_{FL}, 6_{FR}) comprise each a calliper (7) according to any of claims 1 to 3.

11. The braking system (2) according to claim 10, wherein each brake (6) of a wheel of the motorized vehicle wheel (10) comprises a calliper (7) for an electromechanical disc brake of a vehicle wheel, the calliper (7) comprising :
a control unit (73) configured to control the braking of the wheel (10), and
electrical connection means for electrically connecting the control unit (73) to a braking control line (80_{FL}, 80_{FR}, 80_{RL}, 80_{RR}) of the vehicle.

12. The braking system (2) according to any of the preceding claims depending on claim 6, wherein the calliper (7) comprises an electromechanical braking device (72) comprising and electromechanical actuator (74) comprising an electric motor, wherein each control unit (73) is configured to control the braking of the corresponding wheel (10) by controlling the electric motor of the electromechanical actuator (74) in the event of a failure of the amplifier (40).

13. The braking system (2) according to any of the preceding claims depending on claim 7, wherein the calliper (7) comprises an electromechanical braking device (72) comprising and electromechanical actuator (74) comprising an electric motor, wherein each control unit (73) is configured to control the braking of the corresponding wheel (10) by controlling the electric motor of the electromechanical actuator (74) in the event of a failure of the electronic stability control (44).

14. The braking system (2) according to any of the preceding claims, wherein the brake (6) comprises a piston (71) housed in the calliper (7), wherein the electromechanical actuator (74) comprises an electric motor and a transmission device to move the piston (71) when it is driven by the electric motor.

15. The braking system (2) according to any of claims 6 to 14, comprising at least one braking light (12) and a switch (14) for turning on the braking light, the braking actuator (30, 32) comprising a brake pedal (30), the on or off state of the switch (14) depending on the depression of the brake pedal (30),
wherein, in the event that a failure of the amplifier (40) and/or of the electronic stability control (44) is detected, the control unit (73) is configured to control the braking of the wheel (10), when it detects via the state of the switch (14) that the brake pedal (30) is depressed.

16. A motor vehicle (1) comprising a braking system (2) according to any of claims 4 to 10.

17. The motor vehicle (1) according to the preceding claim, wherein the vehicle (1) is a passenger car.
